# EUROPÄISCHE PATENTSCHRIFT

(11) **EP 4 331 067 B1**
(45) Veröffentlichungstag und Bekanntmachung des Hinweises auf die Patenterteilung: **06.05.2026**
(21) Anmeldenummer: 22718677.2
(22) Anmeldetag: 28.03.2022
(51) Int. Cl.: H01T 13/32, H01T 13/34, H01T 13/54, H01T 21/06

(54) **VORKAMMERZÜNDKERZE MIT EXAKT EINSTELLBAREM ELEKTRODENABSTAND SOWIE VERFAHREN HIERZU**
PRECHAMBER SPARK PLUG HAVING AN ACCURATELY ADJUSTABLE ELECTRODE GAP, AND ASSOCIATED METHOD
BOUGIE D'ALLUMAGE DE PRÉCHAMBRE AYANT UN ESPACE D'ÉLECTRODE AJUSTABLE AVEC PRÉCISION, ET PROCÉDÉ ASSOCIÉ

(30) Priorität: 27.04.2021 DE 102021204189
(43) Veröffentlichungstag der Anmeldung: 06.03.2024
(73) Patentinhaber: Robert Bosch GmbH, 70442 Stuttgart (DE)
(72) Erfinder: KASKE, Stephan, 75447 Sternenfels Diefenbach (DE); STEIDTEN, Thomas, 71642 Ludwigsburg (DE); BORMANN, Axel, 96049 Bamberg (DE); ROECKELEIN, Manfred, 96164 Kemmern (DE)
(86) Internationale Anmeldenummer: PCT/EP2022/058074
(87) Internationale Veröffentlichungsnummer: WO 2022/228798

(56) Entgegenhaltungen:
- WO-A1-2022/122181
- DE-A1- 102019 207 399
- DE-A1- 102020 108 430
- DE-A1- 102020 204 745

## Beschreibung

### Stand der Technik

Die vorliegende Erfindung betrifft eine Vorkammerzündkerze mit einem exakt eingestellten Elektrodenabstand zwischen einer Mittelelektrode und einer Masseelektrode sowie ein Verfahren zur Einstellung eines exakten Elektrodenabstandes zwischen einer Masseelektrode und einer Mittelelektrode der Vorkammerzündkerze.

Vorkammerzündkerzen sind aus dem Stand der Technik in unterschiedlichen Ausgestaltungen bekannt. Im Stand der Technik werden Vorkammerzündkerzen bisher hauptsächlich bei stationären Gasmotoren eingesetzt, welche in der Regel nur in einem einzigen Betriebspunkt mit einer relativen hohen Last laufen. Für diesen Betriebspunkt werden dann die jeweiligen Vorkammerzündkerzen ausgelegt. Bei mobilen Brennkraftmaschinen, beispielsweise für Fahrzeuge, muss eine Zündung jedoch auch bei unterschiedlichsten Lastbereichen, insbesondere auch in Teillastbereichen, sichergestellt werden. Dabei ist eine exakte Einhaltung eines Elektrodenabstandes zwischen einer Mittelelektrode und einer Masseelektrode notwendig. Ferner muss beachtet werden, dass bei Vorkammerzündkerzen für Fahrzeuge diese als Massenbauteile herstellbar sind. Die bisher für stationäre Gasmotoren hergestellten Vorkammerzündkerzen werden in Kleinserien gefertigt, was jedoch sehr hohe Kosten nach sich zieht. Von daher besteht Bedarf, Vorkammerzündkerzen hinsichtlich einer Massenfertigung zur Verwendung in mobilen Brennkraftmaschinen für Fahrzeuge fertigen zu können.

DE 10 2019 207399 A1 offenbart eine Vorkammerzündkerze gemäß dem Oberbegriff des Anspruchs 1.

### Offenbarung der Erfindung

Die erfindungsgemäße Vorkammerzündkerze mit den Merkmalen des Anspruchs 1 weist demgegenüber den Vorteil auf, dass ein Elektrodenabstand zwischen einer Mittelelektrode und einer Masseelektrode exakt eingestellt werden kann. Dabei ist der Einstellvorgang für den Elektrodenabstand auch bei einer Massenfertigung der Vorkammerzündkerze geeignet. Dadurch können die Herstellkosten für erfindungsgemäße Vorkammerzündkerze signifikant reduziert werden, so dass insbesondere eine Eignung der Vorkammerzündkerze bei Brennkraftmaschinen für Fahrzeuge vorhanden ist. Insbesondere können Kappe und Gehäuse der Vorkammerzündkerze als ein Bauteil ohne Schweißnaht ausgeführt werden. Dies wird erfindungsgemäß dadurch erreicht, dass die Vorkammerzündkerze eine Mittelelektrode und eine Masseelektrode umfasst, welche in einer Vorkammer angeordnet sind. Die Masseelektrode ist dabei in einer seitlichen Bohrung in einem Gehäuse angeordnet. Dabei ist zwischen der seitlichen Bohrung und der Masseelektrode ein Spaltbereich und ein abdichtender Fixierbereich vorhanden. Erfindungsgemäß ist der Spaltbereich zwischen der Masseelektrode und der seitlichen Bohrung eine Spielpassung.

Die Unteransprüche zeigen bevorzugte Weiterbildungen der Erfindung.

Der Fixierbereich zwischen der Masseelektrode und der seitlichen Bohrung ist vorzugsweise eine Schweißverbindung. Der Fixierbereich ist weiter bevorzugt radial weiter außen als der Spaltbereich angeordnet und bevorzugt an einer Außenseite der Vorkammerzündkerze zwischen der Außenwand des Gehäuses und der Rückseite der Masseelektrode ausgebildet.

Weiter bevorzugt ist die Masseelektrode relativ zur Mittelelektrode in einem Winkel von 90° angeordnet.

Die Masseelektrode ist vorzugsweise zylindrisch. Besonders bevorzugt ist die Masseelektrode ein Vielkant, insbesondere ein Dreikant oder ein Vierkant oder ein Fünfkant oder ein Sechskant. Wenn die Masseelektrode als Vielkant ausgebildet ist, kann insbesondere ein Verdrehen der Masseelektrode bei der Einstellung des Elektrodenabstands vermieden werden. Dadurch kann eine besonders genaue Einstellung des Elektrodenabstands zwischen Mittelelektrode und Masseelektrode erreicht werden.

Weiter bevorzugt weist das Gehäuse eine Oberfläche, insbesondere an einer Außenseite des Gehäuses mit einer sehr kleinen maximalen Rautiefe Rₘₐₓ auf.

Die Rautiefe Rₘₐₓ ist dabei ≤ 10 µm. Hierdurch kann insbesondere während des Verfahrens zur Einstellung des Elektrodenabstands eine Glocke oder ein anderes Abdichtungsbauteil sicher und in abdichtender Weise an der Außenseite des Gehäuses angelegt werden.

Vorzugsweise sind eine Kappe und das Gehäuse einteilig ausgebildet. D.h., die Kappe muss nicht mehr separat am Gehäuse fixiert werden, sondern die Kappe und das Gehäuse bilden ein gemeinsames Bauteil. Dadurch kann auf eine Schweißverbindung oder eine andersartige Verbindung zwischen Kappe und Gehäuse verzichtet werden.

Die Erfindung betrifft ferner ein Verfahren zur Einstellung eines Elektrodenabstandes zwischen einer Mittelelektrode und einer Masseelektrode während einer Herstellung der Vorkammerzündkerze. Das Verfahren umfasst dabei die Schritte des Anordnens der Masseelektrode in einer seitlichen Bohrung in einem Gehäuse der Vorkammerzündkerze, so dass die Masseelektrode frei beweglich in der seitlichen Bohrung angeordnet ist, wobei zur Sicherstellung der Bewegbarkeit der Masseelektrode in der seitlichen Bohrung eine Spielpassung vorgesehen ist. In einem nächsten Schritt wird die Masseelektrode relativ zur feststehenden Mittelelektrode in einem vorbestimmten Elektrodenabstand positioniert. Dies ist möglich, da die Masseelektrode innerhalb der seitlichen Bohrung verschiebbar angeordnet ist. In einem letzten Schritt wird nach Einstellen des vorbestimmten Elektrodenabstands die Masseelektrode am Gehäuse fixiert, so dass der vorbestimmte Elektrodenabstand zwischen Mittelelektrode und Masseelektrode beibehalten wird. Damit ist die exakte Bereitstellung des Abstandes zwischen Mittelelektrode und Masseelektrode beendet. Des Weiteren bietet das erfindungsgemäße Verfahren die Möglichkeit der Einstellung des Elektrodenabstands bei montierter Vorkammerkappe bzw. bei fertig montierter Kerze. Hiermit ergeben sich neue Konstruktionsmöglichkeiten - z.B. Kappe und Gehäuse als ein Bauteil (ohne Schweißnaht) - auszuführen.

Die Fixierung der Masseelektrode am Gehäuse im richtigen Elektrodenabstand erfolgt vorzugsweise mittels einer Schweißverbindung. Die Schweißverbindung wird besonders bevorzugt an der Außenseite der Vorkammerzündkerze zwischen dem Gehäuse und der Masseelektrode ausgebildet. Die Schweißverbindung wird weiter bevorzugt mittels eines Lasers hergestellt.

Eine besonders einfache und kostengünstige Herstellbarkeit wird gewährleistet, wenn die Vorkammerzündkerze nach dem Einschieben der Masseelektrode in die seitliche Bohrung im Gehäuse in eine derartige Position gebracht wird, dass sich aufgrund der Schwerkraft die Masseelektrode nach unten bewegt und die Mittelelektrode kontaktiert. Ausgehend von diesem Zustand des Kontakts zwischen der Masseelektrode und der Mittelelektrode wird dann die Masseelektrode von der Mittelelektrode radial nach außen wegbewegt, bis der gewünschte definierte Elektrodenabstand vorhanden ist. Anschließend erfolgt die Fixierung der Masseelektrode am Gehäuse.

Der Vorgang des Wegbewegens der Masseelektrode von der Mittelelektrode wird besonders bevorzugt mittels pneumatischem Druck durchgeführt. Hierzu wird bevorzugt die Vorkammer der Vorkammerzündkerze unter Druck gesetzt, so dass aufgrund des ansteigenden Drucks sich die Masseelektrode in der seitlichen Bohrung weg von der Mittelelektrode bewegt. Wenn die Masseelektrode dabei einen vorbestimmten Weg zurückgelegt hat und beispielsweise mit ihrer Rückseite aus der seitlichen Bohrung an der Außenseite des Gehäuses langsam herausgeschoben wird, kann die herausgeschobene Weglänge der Masseelektrode gemessen werden und aus diesem Wert auf den Elektrodenabstand zwischen Mittelelektrode und Masseelektrode, welche sich vorher in Kontakt befanden, geschlossen werden. Wenn der gewünschte Elektrodenabstand erreicht ist, kann somit die Fixierung der Masseelektrode am Gehäuse erfolgen.

Die Masseelektrode ist dabei bevorzugt zylindrisch oder besonders bevorzugt als Vielkant ausgebildet. Die Verwendung einer Masseelektrode mit Vielkantform hat dabei insbesondere den Vorteil, dass ein Verdrehen beim Unterdrucksetzen der Masseelektrode von der Innenseite in der Vorkammer verhindert werden kann. Um eine Glocke oder dgl. zum Unterdrucksetzen der Vorkammer sicher an der Vorkammerzündkerze befestigen zu können, ist eine maximale Rautiefe Rₘₐₓ an den Wandbereichen des Gehäuses vorzugsweise sehr klein, insbesondere ≤ 10 µm.

Es sei ferner angemerkt, dass die Einstellung des Elektrodenabstands zwischen Mittelelektrode und Masseelektrode bei der Herstellung der Vorkammerzündkerze als letzter Schritt ausgeführt werden kann, d.h., eine Kappe ist schon auf dem Gehäuse fixiert. Alternativ kann die Einstellung des Elektrodenabstands auch vor Fixierung einer Kappe auf dem Gehäuse durchgeführt werden und die Kappe dann in einem weiteren Schritt auf das Gehäuse aufgesetzt werden, nachdem die Masseelektrode am Gehäuse im richtigen Elektrodenabstand fixiert wurde.

Vorzugsweise wird vor dem Einstellen des Elektrodenabstands eine Kappe am Gehäuse, insbesondere mittels einer Schweißverbindung oder einer Pressverbindung, fixiert. Somit kann als letzter Schritt die Einstellung des Elektrodenabstands vorgenommen werden. Dadurch ist es möglich, dass kein thermischer Verzug beim Elektrodenabstand durch eine nachträgliche Fixierung einer Kappe an einem Gehäuse auftritt. Alternativ sind die Kappe und das Gehäuse einteilig ausgebildet, wodurch Kostenvorteile bei der Herstellung der Vorkammerzündkerze erreicht werden.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht einer Vorkammerzündkerze gemäß einem ersten bevorzugten Ausführungsbeispiel der Erfindung,
- Figur 2: eine schematische Schnittansicht, welche das Verfahren zur Einstellung eines Elektrodenabstands zwischen Mittelelektrode und Masseelektrode von Figur 1 verdeutlicht,
- Figuren 3 bis 5: schematische Teilschnittansichten, welche das erfindungsgemäße Verfahren zur Einstellung des Elektrodenabstands der Vorkammerzündkerze von Figur 1 verdeutlichen, und
- Figur 6: eine schematische Schnittansicht einer Vorkammerzündkerze gemäß einem zweiten bevorzugten Ausführungsbeispiel der Erfindung.

### Bevorzugte Ausführungsformen der Erfindung

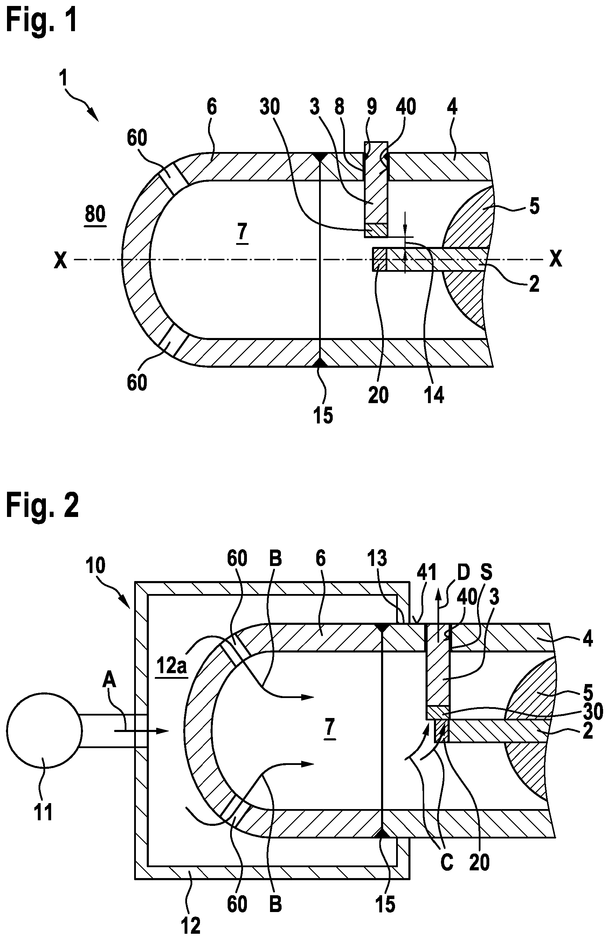

Nachfolgend wird unter Bezugnahme auf die Figuren 1 bis 5 eine Vorkammerzündkerze 1 sowie ein Verfahren zur Einstellung eines Elektrodenabstands zwischen einer Mittelelektrode 2 und einer Masseelektrode 3 gemäß einem ersten Ausführungsbeispiel im Detail beschrieben.

Die Vorkammerzündkerze 1 ist insbesondere für mobile Brennkraftmaschinen geeignet.

Wie aus Figur 1 ersichtlich ist, umfasst die Vorkammerzündkerze 1 eine Mittelelektrode 2 und eine seitliche Masseelektrode 3. Die Masseelektrode 3 ist in einem Winkel von 90° zur Mittelelektrode 2 angeordnet. Die Mittelelektrode 2 verläuft in einer Mittelachse X-X der Vorkammerzündkerze 1. Die Mittelelektrode 2 ist mindestens teilweise in einem Isolator 5 angeordnet. Der Isolator 5 dient zu elektrischen Trennung der Mittelelektrode 2 von dem Gehäuse 4.

Die Vorkammerzündkerze 1 umfasst ferner ein Gehäuse 4 mit einer seitlichen Bohrung 40, in welcher die Masseelektrode 3 angeordnet ist.

Das Gehäuse 4 und eine Kappe 6 definieren dabei eine Vorkammer 7 der Vorkammerzündkerze.

Wie weiter aus Figur 1 ersichtlich ist, weist die Kappe 6 mehrere Kappenlöcher 60 auf, welche für eine Fluidverbindung zwischen der Vorkammer 7 und einem Brennraum 80 einer Brennkraftmaschine eingerichtet sind.

Zwischen der seitlichen Bohrung 40 und der Masseelektrode 3 ist ferner ein Fixierbereich 9 und ein Spaltbereich 8 ausgebildet. Der Fixierbereich 9 ist dabei eine Schweißverbindung zwischen einer Rückseite der Masseelektrode und dem Gehäuse 4.

Wie weiter in Figur 1 gezeigt, ist zwischen der Mittelelektrode 2 und der Masseelektrode 3 ein Elektrodenabstand 14 vorhanden. Der Elektrodenabstand 14 ist dabei die kürzeste Verbindung zwischen der Mittelelektrode 2 und der Masseelektrode 3.

Wie weiter aus Figur 1 ersichtlich ist, weist die Mittelelektrode 2 an ihrer Stirnseite einen Edelmetallpin 20 auf und die Masseelektrode 3 weist an ihrer Stirnseite einen Edelmetallpin 30 auf. Der Elektrodenabstand 14 ist dabei zwischen den beiden Edelmetallpins 20, 30 vorhanden.

Die Masseelektrode 3 ist dabei als Vielkant ausgebildet, kann aber auch zylindrisch sein.

Das erfindungsgemäße Verfahren zum Einstellen eines Elektrodenabstandes 14 zwischen der Mittelelektrode 2 und der Masseelektrode 3 wird unter Bezugnahme auf die Figuren 2 bis 5 im Detail beschrieben.

Wie aus Figur 2 ersichtlich ist, welche einen Aufbau zur Durchführung des Verfahrens zeigt, wird die Einstellung des Elektrodenabstands 14 mittels einer pneumatischen Druckerzeugungseinheit 10 ausgeführt. Die Druckerzeugungseinheit 10 umfasst einen Druckerzeuger 11, beispielsweise einen Verdichter, sowie eine Glocke 12. Die Glocke 12 ist an einem Abdichtbereich 13 an einer Außenseite 41 des Gehäuses 4 oder der Kappe 6 in abdichtender Weise angeordnet. Dadurch entsteht ein abgedichteter Raum im Wesentlichen an der Außenseite der Kappe 6 sowie der Vorkammer 7.

In diesem Ausführungsbeispiel ist die Kappe 6 mittels einer Schweißverbindung 15 am Gehäuse 4 fixiert. Alternativ ist die Kappe direkt in das Gehäuse integriert. Die Masseelektrode 3 ist dabei zylindrisch und in der seitlichen Bohrung 40 mit Spiel S angeordnet. Dieses Spiel S stellt nach Herstellen der Vorkammerzündkerze den Spaltbereich 8 zwischen der Masseelektrode 3 und dem Gehäuse 4 sicher.

In diesem Ausführungsbeispiel ist die exakte Einstellung des Elektrodenabstands 14 zwischen der Mittelelektrode 2 und der Masseelektrode 3 der letzte Schritt bei der Herstellung der Vorkammerzündkerze.

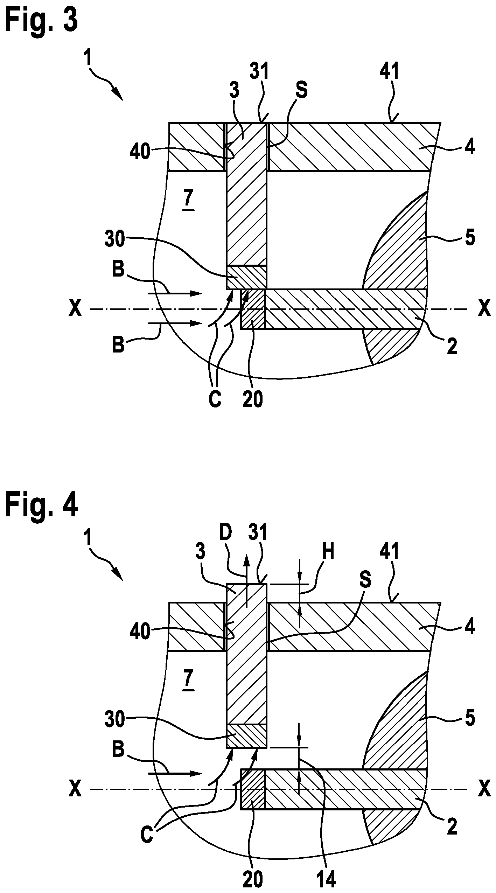

Wie aus den Figuren 2 und 3 deutlich wird, wird zum Einstellen des Elektrodenabstands 14 gemäß dem erfindungsgemäßen Verfahren zuerst ein pneumatischer Druck mittels des Druckerzeugers 11 erzeugt. Wie in Figur 2 durch den Pfeil A angedeutet, wird dieser Druck dem Innenbereich 12a der Glocke 12 der Druckerzeugungseinheit 10 aufgeprägt. Da die Glocke 12 in abdichtender Weise an der Außenseite 41 des Gehäuses 4 angeordnet ist, wird der Druck weiter über die Kappenlöcher 60, wie in Figur 2 durch die Pfeile B angedeutet, in der Vorkammer 7 aufgeprägt.

Die Masseelektrode 3, welche lose in der seitlichen Bohrung 40 angeordnet ist, kontaktiert dabei die Mittelelektrode 2, da die noch nicht ganz fertiggestellte Vorkammerzündkerze 1 derart angeordnet ist, dass die Masseelektrode 3 durch die Schwerkraft nach unten bis in den Kontakt mit der Mittelelektrode 2 geführt ist. Diese Position ist in den Figuren 2 und 3 gezeigt.

Durch den innerhalb der Vorkammer 7 ansteigenden pneumatischen Druck, welcher deutlich höher als der an der Außenseite der Vorkammerzündkerze herrschende Umgebungsdruck ist, liegt der Druck auch an der Stirnseite, genauer der Stirnseite des Edelmetallpins 30 der Masseelektrode 3 an. Dies ist in den Figuren 2 und 3 durch die Pfeile C angedeutet.

Da die Masseelektrode 3 mittels einer Spielpassung S in der seitlichen Bohrung 40 angeordnet ist, bewegt sich nun aufgrund des herrschenden Druckunterschieds die Masseelektrode 3 radial nach außen. Dies ist auch im Detail aus Figur 4 ersichtlich (Pfeil D). Dabei bewegt sich eine Rückseite 31 der Masseelektrode 3 aus der seitlichen Bohrung 40 heraus, was in Figur 4 durch den Abstand H angedeutet ist. Dieser Abstand H entspricht in diesem Ausführungsbeispiel dem Elektrodenabstand 14 zwischen der Mittelelektrode 2 und der Masseelektrode 3, da in diesem Ausführungsbeispiel die Rückseite 31 der Masseelektrode 3 bündig mit der Außenseite 41 des Gehäuses 4 bei Kontakt zwischen Mittelelektrode 2 und Masseelektrode 3 war.

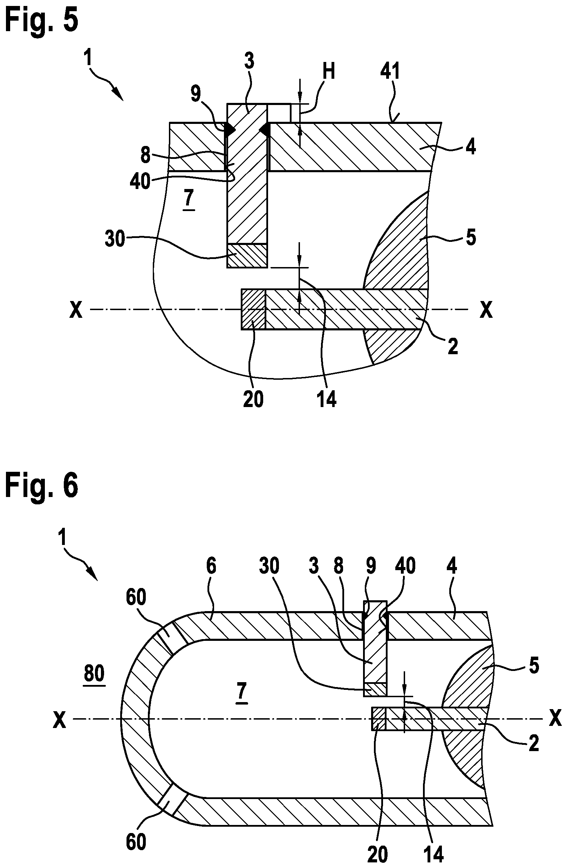

Somit kann auf einfache Weise der Elektrodenabstand 14 von einer Außenseite der Vorkammerzündkerze durch Messen des Abstands H zwischen der Rückseite 31 der sich aus dem Gehäuse bewegenden Masseelektrode zur Außenseite 41 des Gehäuses ermittelt werden. Wenn der Abstand H dem gewünschten Elektrodenabstand 14 zwischen Mittelelektrode 2 und Masseelektrode 3 entspricht, erfolgt anschließend eine Fixierung der Masseelektrode 3 in dieser Position. Hierbei wird eine Schweißverbindung von einer Außenseite der Vorkammerzündkerze zwischen der Masseelektrode 3 und dem Gehäuse 4 erzeugt, welche dann den Fixierbereich 9 in der seitlichen Bohrung 40 zwischen der Masseelektrode 3 und dem Gehäuse 4 bildet. Dies ist in Figur 5 dargestellt.

Da die Rückseite 31 der Masseelektrode 3 im Ausgangszustand, in welchem die Masseelektrode 3 die Mittelelektrode 2 kontaktiert hat, bündig war, entspricht der Abstand H dem Elektrodenabstand 14. Es sei angemerkt, dass die Masseelektrode im Startzustand und im Gehäuse versenkt sein oder über dies hinausstehen kann. Dabei verbleibt in der seitlichen Bohrung 40 radial innerhalb des Fixierbereichs 9 der Spaltbereich 8 zwischen Masseelektrode 3 und Gehäuse 4, welcher bei der Einstellung des Elektrodenabstands die Spielpassung S zwischen Masseelektrode 3 und Gehäuse 4 gebildet hat.

Somit weist die vorliegende Erfindung den Vorteil auf, dass der Elektrodenabstand 14 sehr exakt einstellbar ist. Dabei kann eine einfache Messung des Elektrodenabstands 14 von einer Außenseite der Vorkammerzündkerze her vorgenommen werden.

Es sei angemerkt, dass die Rückseite 31 der Masseelektrode 3 nicht bündig mit der Außenseite 41 im Kontaktzustand mit der Mittelelektrode 2 abschließen muss. Es ist auch möglich, dass die Rückseite im Kontaktzustand zwischen Masseelektrode 3 und Mittelelektrode 2 auch schon etwas aus der seitlichen Bohrung 40 vorsteht. Dieser Vorstand kann auch auf einfache Weise gemessen werden und ausgehend von diesem Vorstand wird dann die erfindungsgemäße Elektrodenabstandseinstellung durchgeführt. Zwar müssen somit zwei Messvorgänge an der Masseelektrode 3 vorgenommen werden; da dies jedoch von der Außenseite der Vorkammerzündkerze her durchführbar sind, ist dies auf einfache Weise möglich.

Somit ist das erfindungsgemäße Verfahren zur Einstellung des Elektrodenabstands 14 auch für eine Massenfertigung geeignet, so dass die Vorkammerzündkerze 1 auch bei mobilen Brennkraftmaschinen, welche in hohen Stückzahlen hergestellt werden, einsetzbar ist.

Ein weiterer großer Vorteil des erfindungsgemäßen Verfahrens liegt darin, dass die Fixierung der Masseelektrode 3 als letzter Schritt bei der Herstellung der Vorkammerzündkerze ausgeführt werden kann. Es ist somit nicht mehr notwendig, beispielsweise die Kappe nach Einstellen des Elektrodenabstands auf das Gehäuse 4 aufzuschweißen. Dadurch kann verhindert werden, dass die bei der Fixierung der Kappe 6 am Gehäuse 4 auftretende Schweißwärme einen Einfluss auf den Elektrodenabstand 14 hat. Gemäß der Erfindung kann somit sichergestellt werden, dass der Elektrodenabstand 14 exakt den gewünschten Abstand aufweist.

Figur 6 zeigt eine Vorkammerzündkerze 1 gemäß einem zweiten bevorzugten Ausführungsbeispiel der Erfindung. Gleiche bzw. funktional gleiche Teile sind mit den gleichen Bezugszeichen wie im ersten Ausführungsbeispiel bezeichnet.

Im Unterschied zum ersten Ausführungsbeispiel ist beim zweiten Ausführungsbeispiel das Gehäuse 4 und die Kappe 6 als einteiliges Bauteil ausgebildet. Dadurch kann eine Schweißverbindung oder eine andersartige Verbindung zwischen Kappe und Gehäuse entfallen. Hierdurch können insbesondere die Herstellungskosten signifikant reduziert werden. Bei der Herstellung der Vorkammerzündkerze kann somit das Verfahren zum Einstellen des Elektrodenabstands als letzter Schritt bei der Herstellung der Vorkammerzündkerze ausgeführt werden. Eine Messung des Elektrodenabstands kann durch das erfindungsgemäße Verfahren von der Außenseite der Vorkammerzündkerze her erfolgen. Eine Fixierung der Masseelektrode am einteiligen Gehäuse-Kappenbauteil kann mittels einer Schweißverbindung von der Außenseite der Vorkammerzündkerze erfolgen. Hierbei ist ein thermischer Eintrag in die Masseelektrode sehr gering, so dass sich dadurch der eingestellte Elektrodenabstand 14 nicht verändert. Falls eine Fixierung der Masseelektrode ohne thermisches Verfahren gewünscht ist, kann die Masseelektrode beispielsweise mittels eines Verstemmvorgangs oder dgl. am einteiligen Gehäuse-Kappenbauteil durchgeführt werden. Ansonsten entspricht dieses Ausführungsbeispiel dem ersten Ausführungsbeispiel, so dass auf die dort gegebene Beschreibung verwiesen werden kann.

## Patentansprüche

1. Vorkammerzündkerze umfassend:
- eine Mittelelektrode (2) und eine Masseelektrode (3), welche in einer Vorkammer (7) angeordnet sind, und
- ein Gehäuse (4) mit einer seitlichen Bohrung (40),
- wobei die Masseelektrode (3) in der seitlichen Bohrung (40) angeordnet ist, derart, dass zwischen der Masseelektrode (3) und dem Gehäuse (4) ein Spaltbereich (8) und ein Fixierbereich (9) vorhanden ist, **dadurch gekennzeichnet, dass** der Spaltbereich (8) eine Spielpassung (S) zwischen Masseelektrode (3) und seitlicher Bohrung (40) ist.

2. Vorkammerzündkerze nach einem der vorhergehenden Ansprüche, wobei der Fixierbereich (9) eine Schweißverbindung ist.

3. Vorkammerzündkerze nach einem der vorhergehenden Ansprüche, wobei der Fixierbereich (9) radial weiter außen als der Spaltbereich (8) angeordnet ist.

4. Vorkammerzündkerze nach einem der vorhergehenden Ansprüche, wobei die Mittelelektrode (2) senkrecht zur Masseelektrode (3) angeordnet ist.

5. Vorkammerzündkerze nach einem der vorhergehenden Ansprüche, wobei die Masseelektrode (3) zylindrisch ist oder ein Vielkant ist.

6. Vorkammerzündkerze nach einem der vorhergehenden Ansprüche, wobei das Gehäuse an einer Außenseite (41) eine definierte maximale Rautiefe Rₘₐₓ von Rₘₐₓ ≤ 10 µm aufweist, welche zur Abdichtung mit einer Druckerzeugungseinheit (10) eingerichtet ist.

7. Vorkammerzündkerze nach einem der vorhergehenden Ansprüche, wobei eine Kappe (6) und das Gehäuse (4) einteilig ausgebildet sind.

8. Verfahren zum Einstellen eines Elektrodenabstands (14) zwischen einer Mittelelektrode (2) und einer Masseelektrode (3) bei der Herstellung einer Vorkammerzündkerze, umfassend die Schritte:
- Anordnen der Masseelektrode (3) in einer seitlichen Bohrung (40) in einem Gehäuse (4) derart, dass die Masseelektrode (3) frei beweglich in der seitlichen Bohrung (40) angeordnet ist, wobei zur Sicherstellung der Bewegbarkeit der Masseelektrode (3) in der seitlichen Bohrung (40) eine Spielpassung S vorgesehen ist,
- Positionieren der Masseelektrode (3) relativ zur feststehenden Mittelelektrode (2) in einem vorbestimmten Elektrodenabstand (14) durch Verschieben der Masseelektrode (3) in der seitlichen Bohrung,
- Messen des Elektrodenabstands zwischen Mittelelektrode (2) und Masseelektrode (3), und
- nach Einstellen des vorbestimmten Elektrodenabstands (14) Fixieren der Masseelektrode (3) in der seitlichen Bohrung (40), so dass der vorbestimmte Elektrodenabstand (14) beibehalten wird.

9. Verfahren nach Anspruch 8, wobei das Fixieren der Masseelektrode (3) am Gehäuse (4) mittels eines Schweißvorgangs, insbesondere an einer Außenseite des Gehäuses (4), erfolgt, derart, dass zwischen der Masseelektrode (3) und der seitlichen Bohrung (4) ein Fixierbereich (9) und ein Spaltbereich (8) vorhanden ist.

10. Verfahren nach einem der Ansprüche 8 bis 9, wobei das Anordnen der Masseelektrode (3) in der seitlichen Bohrung (40) derart ausgeführt wird, dass zuerst ein Kontakt zwischen Masseelektrode (3) und Mittelelektrode (2) vorhanden ist und die Masseelektrode (3) ausgehend von diesem Kontaktzustand zwischen Mittelelektrode (2) und Masseelektrode (3) radial nach außen verschoben wird.

11. Verfahren nach einem der Ansprüche 8 bis 10, wobei das Bewegen der Masseelektrode (3) in der seitlichen Bohrung (40) mittels pneumatischem Druck erfolgt.

12. Verfahren nach einem der Ansprüche 8 bis 11, wobei der Elektrodenabstand (14) durch Messen eines Abstandes einer Rückseite (31) der Masseelektrode (3) von einer Außenseite (41) des Gehäuses (4) bestimmt wird.

13. Verfahren nach einem der Ansprüche 8 bis 12,
- wobei vor dem Einstellen des Elektrodenabstandes eine Kappe (6) am Gehäuse (4), insbesondere mittels einer Schweißverbindung (15), fixiert wird, oder
- wobei die Kappe (6) und das Gehäuse (4) einteilig ausgebildet sind.

## Claims

1. Pre-chamber spark plug, comprising:
- a centre electrode (2) and an earth electrode (3), which are arranged in a pre-chamber (7), and
- a housing (4) having a lateral hole (40),
- wherein the earth electrode (3) is arranged in the lateral hole (40) in such a way that there is a gap region (8) and a fixing region (9) between the earth electrode (3) and the housing (4), **characterized in that** the gap region (8) is a clearance fit (S) between the earth electrode (3) and the lateral hole (40).

2. Pre-chamber spark plug according to one of the preceding claims, wherein the fixing region (9) is a welded connection.

3. Pre-chamber spark plug according to one of the preceding claims, wherein the fixing region (9) is arranged radially further to the outside than the gap region (8).

4. Pre-chamber spark plug according to one of the preceding claims, wherein the centre electrode (2) is arranged perpendicular to the earth electrode (3).

5. Pre-chamber spark plug according to one of the preceding claims, wherein the earth electrode (3) is cylindrical or is a polygon.

6. Pre-chamber spark plug according to one of the preceding claims, wherein the housing has, on an outer side (41), a defined maximum roughness depth Rₘₐₓ of Rₘₐₓ ≤ 10 µm, which is designed to be sealed off with a pressure generating unit (10).

7. Pre-chamber spark plug according to one of the preceding claims, wherein a cap (6) and the housing (4) are formed in one piece.

8. Method for adjusting an electrode spacing (14) between a centre electrode (2) and an earth electrode (3) during production of a pre-chamber spark plug, comprising the steps of:
- arranging the earth electrode (3) in a lateral hole (40) in a housing (4) in such a way that the earth electrode (3) is arranged in a freely movable manner in the lateral hole (40), wherein a clearance fit S is provided in order to ensure the movability of the earth electrode (3) in the lateral hole (40),
- positioning the earth electrode (3) relative to the stationary centre electrode (2) with a predetermined electrode gap (14) by moving the earth electrode (3) in the lateral hole,
- measuring the electrode gap between the centre electrode (2) and the earth electrode (3), and
- after adjusting the predetermined electrode gap (14), fixing the earth electrode (3) in the lateral hole (40), so that the predetermined electrode gap (14) is maintained.

9. Method according to Claim 8, wherein the earth electrode (3) is fixed to the housing (4) by means of a welding process, in particular to an outer side of the housing (4), in such a way that there is a fixing region (9) and a gap region (8) between the earth electrode (3) and the lateral hole (4).

10. Method according to one of Claims 8 and 9, wherein the earth electrode (3) is arranged in the lateral hole (40) in such a way that first there is contact between the earth electrode (3) and the centre electrode (2) and the earth electrode (3) is moved radially to the outside starting from this contact state between the centre electrode (2) and the earth electrode (3).

11. Method according to one of Claims 8 to 10, wherein the earth electrode (3) is moved in the lateral hole (40) by means of pneumatic pressure.

12. Method according to one of Claims 8 to 11, wherein the electrode gap (14) is determined by measuring a distance between a rear side (31) of the earth electrode (3) and an outer side (41) of the housing (4).

13. Method according to one of Claims 8 to 12,
- wherein, before adjusting the electrode gap, a cap (6) is fixed to the housing (4), in particular by means of a welded connection (15), or
- wherein the cap (6) and the housing (4) are formed in one piece.

## Revendications

1. Bougie d'allumage de préchambre comprenant :
- une électrode centrale (2) et une électrode de masse (3), qui sont disposées dans une préchambre (7), et
- un boîtier (4) avec un alésage latéral (40),
- l'électrode de masse (3) étant disposée dans l'alésage latéral (40) de telle manière qu'une zone de fente (8) et une zone de fixation (9) se trouvent entre l'électrode de masse (3) et le boîtier (4), **caractérisée en ce que** la zone de fente (8) est un ajustement avec jeu (S) entre l'électrode de masse (3) et l'alésage latéral (40).

2. Bougie d'allumage de préchambre selon l'une des revendications précédentes, la zone de fixation (9) étant une liaison par soudage.

3. Bougie d'allumage de préchambre selon l'une des revendications précédentes, la zone de fixation (9) étant disposée radialement davantage à l'extérieur que la zone de fente (8).

4. Bougie d'allumage de préchambre selon l'une des revendications précédentes, l'électrode centrale (2) étant disposée perpendiculairement à l'électrode de masse (3).

5. Bougie d'allumage de préchambre selon l'une des revendications précédentes, l'électrode de masse (3) étant cylindrique ou un polyèdre.

6. Bougie d'allumage de préchambre selon l'une des revendications précédentes, le boîtier présentant, sur une face extérieure (41), une profondeur de rugosité maximale définie Rₘₐₓ de Rₘₐₓ ≤ 10 µm qui est mise au point pour assurer l'étanchéité avec une unité de production de pression (10).

7. Bougie d'allumage de préchambre selon l'une des revendications précédentes, un capuchon (6) et le boîtier (4) étant formés d'un seul tenant.

8. Procédé de réglage d'un espacement d'électrode (14) entre une électrode centrale (2) et une électrode de masse (3) lors de la fabrication d'une bougie d'allumage de préchambre, comprenant les étapes :
- disposition de l'électrode de masse (3) dans un alésage latéral (40) dans un boîtier (4) de telle manière que l'électrode de masse (3) est disposée de manière librement mobile dans l'alésage latéral (40), un ajustement avec jeu S étant prévu dans l'alésage latéral (40) pour assurer la mobilité de l'électrode de masse (3),
- positionnement de l'électrode de masse (3) par rapport à l'électrode centrale (2) fixe à un espacement d'électrode (14) prédéterminé en faisant coulisser l'électrode de masse (3) dans l'alésage latéral,
- mesure de l'espacement d'électrode entre l'électrode centrale (2) et l'électrode de masse (3), et
- après avoir réglé l'espacement d'électrode (14) prédéterminé, fixation de l'électrode de masse (3) dans l'alésage latéral (40) de telle sorte que l'espacement d'électrode (14) prédéterminé est conservé.

9. Procédé selon la revendication 8, l'électrode de masse (3) étant fixée sur le boîtier (4) au moyen d'un processus de soudage, en particulier sur une face extérieure du boîtier (4), de telle manière qu'une zone de fixation (9) et une zone de fente (8) se trouvent entre l'électrode de masse (3) et l'alésage latéral (4).

10. Procédé selon l'une des revendications 8 à 9, l'électrode de masse (3) dans l'alésage latéral (40) étant disposée de telle manière que dans un premier temps, un contact est présent entre l'électrode de masse (3) et l'électrode centrale (2) et l'électrode de masse (3) est coulissée radialement vers l'extérieur en partant dudit état de contact entre l'électrode centrale (2) et l'électrode de masse (3)

11. Procédé selon l'une des revendications 8 à 10, le déplacement de l'électrode de masse (3) dans l'alésage latéral (40) étant effectué au moyen d'une pression pneumatique.

12. Procédé selon l'une des revendications 8 à 11, l'espacement d'électrode (14) étant déterminé en mesurant une distance entre une face arrière (31) de l'électrode de masse (3) et une face extérieure (41) du boîtier (4).

13. Procédé selon l'une des revendications 8 à 12,
- un capuchon (6) étant fixé sur le boîtier (4), en particulier au moyen d'une liaison par soudage (15), avant de régler l'espacement d'électrode, ou
- le capuchon (6) et le boîtier (4) étant formés d'un seul tenant.
